(19)
Europäisches
Patentamt
European
Patent Office
Office européen
des brevets

(11) **EP 2 284 673 A2**

(12) **EUROPEAN PATENT APPLICATION**

(43) Date of publication:
**16.02.2011 Bulletin 2011/07**

(51) Int Cl.:
***G06F 3/048*** *(2006.01)*

(21) Application number: **10171613.2**

(22) Date of filing: **02.08.2010**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**
Designated Extension States:
**BA ME RS**

(30) Priority: **06.08.2009 KR 20090072485**

(71) Applicant: **Samsung Electronics Co., Ltd.**
**Suwon-si, Gyeonggi-do 442-742 (KR)**

(72) Inventors:
• **Park, Se-Hwan**
 **Gyeonggi-do (KR)**
• **Kim, Hyung-Jun**
 **Gyeonggi-do (KR)**
• **Lee, Ji-Hoon**
 **Gyeonggi-do (KR)**

(74) Representative: **Jenkins, Richard Gavin**
 **Harrison Goddard Foote**
 **106 Micklegate**
 **York YO1 6JX (GB)**

(54) **Method and apparatus for inputting a character in a portable terminal having a touch screen**

(57)     A method and apparatus for inputting a character in a portable terminal including a touch screen. The touch screen is divided into a character display area for displaying a finally selected character, a character guide area for displaying a character array including multiple characters that are selectable by a user, and a character selection area for sensing a touch input of the user. A single character is selected from the characters displayed on the character guide area according to a drag of the touch input sensed through the character selection area, and displayed the character guide area. The displayed character is then finally selected and displayed on the character display area when the touch input is released.

FIG.4

EP 2 284 673 A2

**Description**

**BACKGROUND OF THE INVENTION**

1. Field of the Invention

The present invention relates generally to a portable terminal having a touch screen, and more particularly, to a method and an apparatus for inputting a character through a touch screen.

2. Description of the Related Art

Portable terminals such as mobile phones, Personal Digital Assistants (PDAs), Portable Multimedia Players (PMPs), or laptop computers continually evolve to become evermore compact and light. Part of this evolution has required the disposal of the traditional keypad in favor of modern touch screens. Touch screen technology has also improved and has gained recent fame on laptops and mobile phones.

The conventional touch screen is usually comprised of an LCD or OLED screen and a touch panel mounted on the screen. Touch screens can be used to input character shapes or to select icons that may execute an application on the device.

The common touch keyboard used for character input employs a reduced keyboard having keys arranged in the traditional QWERTY arrangement. Alternatively, designers may also employ a 3x4 "telephone" keypad in which one key may correspond to three or four letters.

Since portable terminals are designed to be light and compact, they are often offered with a reduced screen size. This small screen size reduces the available space for a touch keyboard. Thus, there is a need to minimize the number of keys while simultaneously allowing the user to quickly and easily input the characters.

Portable QWERTY- keyboards are severely constrained by a small screen. Oftentimes a user will feel that the large number of small keys makes typing difficult.

The 3x4 keypad has fewer keys because each key holds multiple letters. This distribution makes 3x4 keys easier to find than QWERTY keys, but comes at the expense of having to press a key multiple times to select the desired character.

Another disadvantage of the 3x4 keypad is that the keys are not arranged in a convenient shape. Instead, 3x4 keypads are arranged in the traditional grid familiar to digital telephone users. This configuration is inconvenient for the user because he or she must use both hands many times for inputting a word and to reach for portions of the keypad that are not automatically accessible. This difference allows for easier access to characters but comes at the expense of typing speed.

As such, the conventional technology has a problem in that tactile keyboards or 3x4 keypads are presented to the user without taking advantage of the morphable nature of touch screen interfaces.

A traditional tactile keyboard has the advantage that a user may feel the buttons. This response provides the user with a certain assurance that he or she hit one key and one key alone. Touch screen keyboards on the other hand, lack tactile feedback. This makes it very difficult to discriminate between the center of the button and the boundary between buttons. Oftentimes, this boundary is hidden under the user's finger and can lead to an incorrect character selection. There is also the problem of finding the next key in an input sequence. Again, this problem is less likely to occur on tactile keyboards because a user can sense the distances between keys. Finally, users who employ their thumbs to make a selection may find that they do not have the same level of accuracy as they do with other digits. Thus, there is a need for creating a method that allows easy input of characters on a touch screen.

**SUMMARY OF THE INVENTION**

The present invention has been made to solve at least the aforementioned problems found in the prior art, and to provide a method and an apparatus for quickly and easily inputting a character on a touch screen.

Additionally, the present invention provides a method and an apparatus for verifying the character during the act of character selection.

Further, the present invention also reduces the time required for a user to search for characters by improving the shape of the traditional keypad.

In accordance with an aspect of the present invention, there is provided a method for inputting a character in a portable terminal including a touch screen. The method includes: displaying a character display area for displaying a finally selected character, a character guide area for displaying a character array including multiple characters that are selectable by a user, and a character selection area for sensing a touch input of the user, during a character input mode; sensing a drag of the touch input through the character selection area; selecting a character from among the characters displayed on the character guide area corresponding to the sensed touch and drag sensed through the character selection area; displaying an expression representing the selection of the character through the character guide area; and finally selecting and displaying the selected character on the character display area, if the touch input is released.

In accordance with another aspect of the present invention, there is provided an apparatus for inputting a character in a portable terminal. The apparatus includes: a touch screen display; and a control unit for dividing the touch screen into a character display area for displaying a finally selected character, a character guide area for displaying a character array including multiple characters that are selectable by a user, and a character selection area for sensing a touch input of the user, to display the divided areas on the touch screen display during a character input mode, selecting a character from the characters displayed on the character guide area according to a drag of the touch input sensed through the character selection area, displaying an expression representing the selection of the character through the character guide area, and finally selecting and displaying a currently selected character on the character display area, if the touch input is released.

## BRIEF DESCRIPTION OF THE DRAWINGS

The above and other aspects, features, and advantages of the present invention will be more apparent from the following detailed description taken in conjunction with the accompanying drawings, in which:

> FIG. 1 illustrates a portable terminal including a touch screen according to an embodiment of the present invention;
> FIGs. 2A and 2B illustrate an operating process of a portable terminal according to an embodiment of the present invention; and
> FIGs. 3 illustrates a screen according to an embodiment of the present invention; and
> FIG. 4 illustrates a character selection process according to an embodiment of the present invention.

## DETAILED DESCRIPTION OF EMBODIMENTS OF THE INVENTION

Hereinafter, various embodiments of the present invention will be described with reference to the accompanying drawings. In the following description, the same elements will be designated by the same reference numerals although they are illustrated in different drawings. Further, a detailed explanation of known functions and constitutions may be omitted to avoid unnecessarily obscuring the subject matter of the present invention.

A touch screen according an embodiment to the present invention is divided into three regions: (1) a character display area in which a character finally selected by a user is displayed, (2) a character guide area for providing a character array including multiple characters that are selectable by the user and guiding the character temporarily selected by the user corresponding to the touch input of the user by interactively providing the user with a visual feedback for the touch input of the user, and (3) a character selection area for receiving the touch input of the user.

Basically, a touch screen in accordance with an embodiment of the present invention is divided into an area for displaying selectable characters and visual feedback with respect to the act of selecting a character, an area for receiving the actual touch input of the user, and an area for displaying the selected characters.

More specifically, the character guide area displays available characters for user selection. The user initiates a selection of character by touching the character selection area with an appropriate gesture, e.g., a touch, drag, and/or trace. Thereafter, while visually referring to the character array in the character guide area, the user highlights a character from the character array in the character guide area through a touch input through the character selection area. When the touch input of the user is released, i.e., then the user stops touching character selection area, the currently highlighted character is displayed on the character display area so that it is possible to input the character.

In the following description, the term "drag" refers to the movement of a finger or an input device, such as a stylus pen, from one point to another, while maintaining contact with a touch pad.

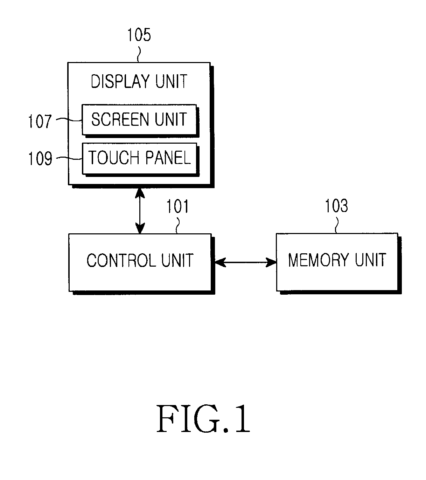

FIG. 1 illustrates a portable terminal according to an embodiment of the present invention. The portable terminal is any terminal, which a user can easily carry and may include, for example, a mobile phone, a PDA, a PMP, or a digital music player.

Referring to FIG. 1, the portable terminal includes a control unit 101, a memory unit 103, which is connected to the control unit 101, and a display unit 105.

The display unit 105 includes a screen unit 107 and a touch panel 109, which make up a touch screen. The display unit 105 displays images and information on the screen unit 107. The screen unit 107, for example, can be implemented with a Liquid Crystal Display (LCD) and an LCD control unit, memory that is capable of storing displayed data, an LCD display element, etc.

The touch panel 109 overlays the screen unit 107 so that the user can "touch" objects displayed on the screen unit 107. The touch panel 109 includes a touch sensing unit and a signal conversion unit (not shown). The touch sensing unit senses tactile user commands, such as touch, drag, and drop, based on the change of some physical quantity, such as resistance or electrostatic capacity. The signal conversion unit converts the change of the physical quantity into a touch signal and outputs the converted touch signal to the control unit 101.

The memory unit 103 stores programming for the control unit 101 as well as reference data, and various other kinds of renewable data for storage, and is used for the operation of the control unit 101. The memory unit 103 also stores information relating to the touch screens' three regions: the character guide area, the character selection area, and the character display area.

The character display area refers to an area for displaying the character that the user desires to finally input, i.e. the character finally selected by the user. The character guide area refers to an area for displaying a character array including multiple characters that can be selected by the user, and interactively provides the user with a visual feedback for the touch input of the user. In this respect, the portable terminal can visually guide the character that has been temporarily selected by the user through the character guide area. The character selection area refers to an area for inducing the touch input of the user. The touch panel 109 outputs the touch input of the user sensed through the character selection area in the character input mode to the control unit 101.

The memory unit 103 stores a plurality of character sets. For the purposes of the present invention, a character set is a group of symbols or characters. For example, a character set may include all of the characters necessary to write in the Korean or English languages. Additional character sets could include the Arabic numerals 0-9 or even a set of emoticons.

The memory unit 103 also stores information representing the screen coordinates of the characters included in the corresponding character set.

In accordance with an embodiment of the present invention, the character set is arranged as a circle. Other embodiments may arrange the character sets in elliptical, oval, or polygonal shapes. Thus, the array information according to an embodiment of the present invention includes coordinates for each character in the shaped array. If there is a large number of characters in the character set, an embodiment of the present invention may use two or more shaped arrays to adequately display the character set.

For example, a Korean character set might include two circular arrays: a vowel circular-shaped array for vowels and a consonant circular-shaped array for consonants. Under these circumstances, the array information would include information on the two circular arrays as well as the screen coordinates of each vowel and consonant.

The control unit 101 acts as the "brain" of the portable terminal. In addition to processing signal data, it controls all of the sub-units of the portable terminal. Such control might amount to processing voice and data signals and would be determined by the intended use of the device. , Accordingly, the control unit 101 reacts to the commands produced by the touch panel 109.

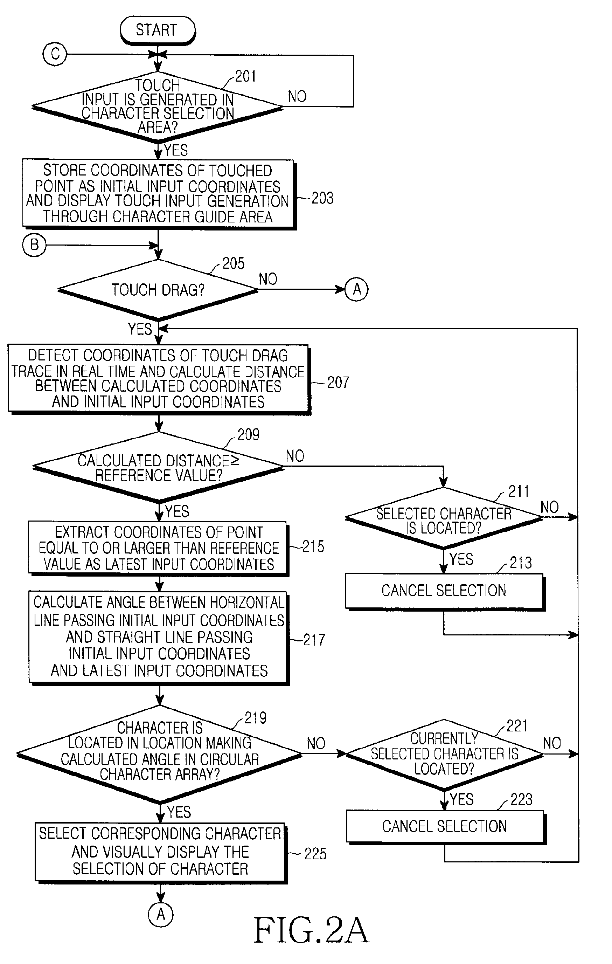

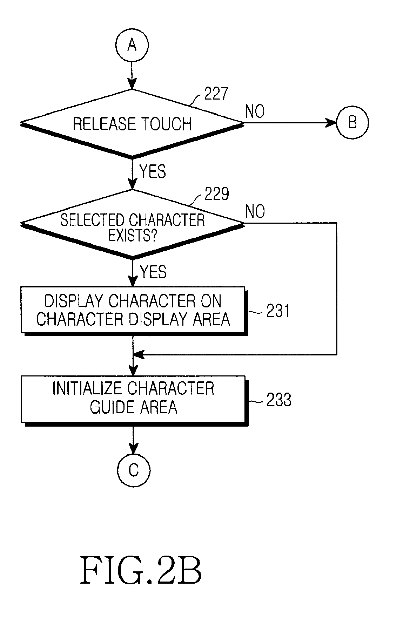

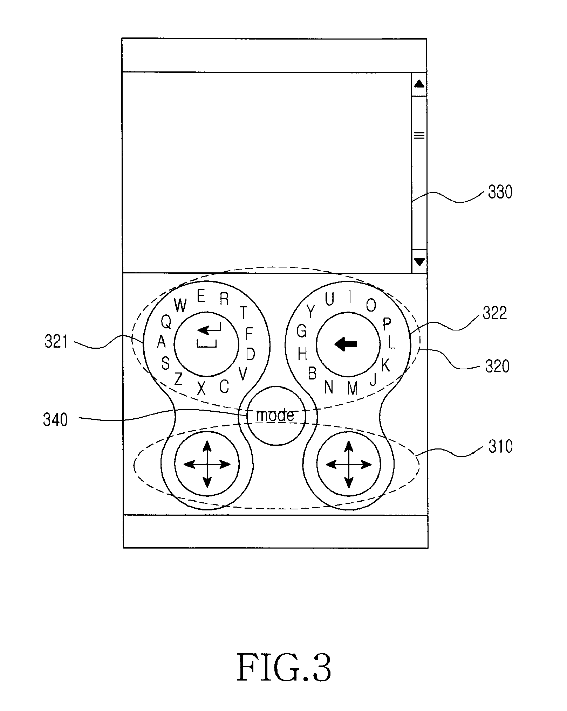

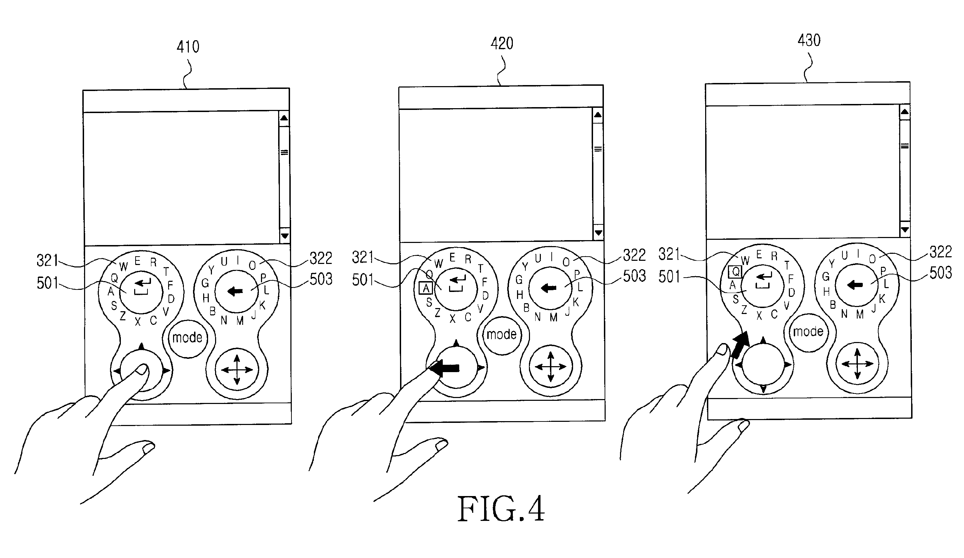

FIGs. 2A and 2B illustrate a control process of the control unit 101, and FIGs. 3 and 4 illustrate displayed screens according to embodiments of the present invention.

When the character input mode is set, the control unit 101 divides the touch screen as illustrated in FIG. 3. Accordingly, the control unit 101 divides the screen into the aforementioned regions: the character display area 330, the character guide area 320, and the character selection area 310. FIG. 3 illustrates a character array corresponding to the English language character set in the character guide area 320.

Referring to FIG. 3, the English letters are divided into two circular character arrays, i.e., a first circular character array 321 and a second circular character array 322 .

When multiple character arrays are provided at the same time, the character selection area 310 may be divided into two character selection areas corresponding to each character array, as illustrated in FIGs. 3 and 4, or a single character selection area 310 can be used to select a characters from the multiple character arrays by also being able to toggle between each of the arrays.

The user initiates the character selection by touching the character selection area 310 using a finger or other input device, such as a stylus. The user can then rely on the visual feedback provided by the character guide area so the user can select the character to be input among the characters arranged in the first circular character array 321 or the second circular character array 322. If the user chooses to change the displayed character set, the user may press a mode key 340. For example, this operation might be useful if a user needed to switch between letters and numbers or English and Korean characters.

Referring to FIG. 2A, the control unit 101 determines if a touch input is generated in the character selection area 310 in a standby state in step 201. If the touch input is determined, the control unit 101 stores coordinates of a touch location as initial input coordinates.

The standby state refers to a state where the touch input is not sensed. The initial input coordinates are stored as a reference for determining which character is selected when the user touches and drags for the character selection later.

In FIGs. 3 and 4, a circular-shape is used as the character array pattern in accordance with an embodiment of the present invention. When a user drags a gesture across the touch screen, than angle of the drag is recorded and used to determine which character was selected on the character guide area. More specifically, an angle between a horizontal line passing the initial touch input point and a segment from the initial touch input point to each point within the drag is first calculated, and the calculated angle is then applied to the circular character array.

In accordance with an embodiment of the present invention, to the control unit 101 calculates the angle only when a straight-line distance between the initial touch input point and each point within the touch drag trace is equal to or larger than a predetermined reference value. The reference value is stored in the memory unit 103.

In step 203, the control unit 101 stores the initial input coordinates and visually displays the generation of the touch input through the character guide area at the same time.

For example, as illustrated in a first screen 410 of FIG. 4, if the user touches the character selection area corresponding to the first circular character array 321, a first indicator 501 serving as an enter sign representing the generation of the touch input corresponding to the first circular character array 321 is displayed on the character guide area 320, i.e., at a center of the first circular character array 321. Further, a second indicator 503 in the shape of an arrow representing the generation of the touch input corresponding to the first circular character array 321 is displayed at a center of the second circular character array 322. These first and second indicators 501 and 503 may be maintained until the touch input corresponding to the first circular character array is released.

According to an embodiment of the present invention, when inputting the character, the user moves a finger toward the desired character with reference to the displayed first circular character array 501, while maintaining contact with the touch panel 109. For example, referring to FIG. 4, if the user wants to select "A", the user moves the finger leftward as illustrated in the second screen 420. For example, the finger is horizontally moved based on the initial input point, and in particular, the movement angle of the finger is 0°.

Returning to FIG. 2A, the control unit 101 determines if the touch drag input of the user is generated in step 205. If the touch drag input of the user is generated, the control unit 101 detects coordinates of the touch drag trace in real time and calculates a distance between the detected coordinates and the initial input coordinates in step 207. Then, the control unit 101 determines if the calculated distance is equal to or larger than the reference value in step 209. If the calculated distance is equal to or larger than the reference value, the process proceeds to step 215. If the calculated distance is less than a reference value, the control unit 101 calculates a distance between the next coordinates of the touch drag trace and the initial input coordinates.

In step 215, the control unit 101 extracts the coordinates of the point equal to or larger than the reference value as the latest input coordinates. In step 217, the control unit 101 calculates an angle θ with the horizontal line passing the initial input coordinates and the straight line passing the initial input coordinates and the latest input coordinates. The angle θ can be obtained using Equation (1).

$$\theta = \arctan\left((y'-y)/(x'-x)\right) \dots\dots\dots\dots\dots(1)$$

In Equation (1), the initial input coordinates are (x, y), and the latest input coordinates are (x', y').

The angle θ is 0° in the second screen 420 of FIG. 4.

In step 219, the control unit 101 determines if a character is located at a location making the calculated angle within the first circular character array 321. That is, the control unit 201 determines if the segment from the center point of the first circular character array 321 to the location of the character within the first circular character array 321 makes the calculated angle with respect to the horizontal line passing the center point of the first circular character array 321.

If a character is located at the location making the corresponding angle, the control unit 101 temporarily selects the corresponding character and visually displays the selection of the character through the character guide area 310. For example, if the touch drag as illustrated in the second screen 420 of FIG. 4 is generated, the alphabet "A" may be selected and the control unit 101 highlights and displays the alphabet "A". If a character is already being temporarily displayed, and is different from the currently-recognized character, the temporary selection of the character is replaced by the currently-recognized character that is temporarily selected.

Accordingly, the user can visually identify that the alphabet "A" is selected according to the touch drag in a left direction. If the user desires to input the character "A", the user removes the finger from the touch panel 109.

In step 227 of FIG. 2B, the control unit 101 determines if the touch of the user is released. If the touch of the user is released, the control unit 101 determines if the temporarily selected character, which corresponds to the highlighted character, is included in the circular character array in step 229. If the temporarily selected character is included in the circular character array, the control unit 101 displays the corresponding character on the character display area 330 in step 231.

In step 233, the control unit 101 initializes a display state of the character guide area 330, e.g., initializes a display state of the character guide area 330 into a screen illustrated in FIG. 3, and the process returns to step 201.

If it is determined in step 229 that the temporarily selected character is not included in the circular character array, even though the touch input of the user is released, the control unit 101 only initializes the display state of the character guide area in step 223 and the process returns to step 201.

As described above, the user can visually identify the correct selection of the character to be input and easily input the character.

When a character is temporarily selected or no character is temporarily selected, the user can continuously touch-drag without releasing the touch input. In this case, the control unit 101 repeatedly performs the aforementioned processes.

For example, there will now be described a case in which the user sequentially changes a drag direction into an upper and right direction and selects the letter "Q" while maintaining the touch drag input, as illustrated in the third screen 430, when the letter "A" is first selected as illustrated in the second screen 420.

Specifically, the control unit 101 continuously detects the coordinates of the touch drag trace and calculates the distance between the detected coordinates and the initial input coordinates. Then, the control unit 101 determines if the calculated distance is equal to or larger than the reference value. If the calculated distance is less than the reference value, the control unit 101 determines if a temporarily selected character is currently located at the location making the calculated angle in step 211. If the temporarily selected character is currently located at the location making the calculated angle, the control unit 101 cancels the temporary selection of the character and correspondingly cancels the display of the highlighted character, and calculates the distance between the next coordinates and the initial input coordinates in step 213.

For example, in the drag for selecting the letter "Q" by the user in the third screen 430, the distance between the coordinates of the touch drag trace and the initial input coordinates may be less than the reference value, and correspondingly the temporary selection of the letter "A" is cancelled. This is to visually inform the user that the input of the user exceeds a selection validity scope of the already-selected character during the selection of another character, other than the already-selected character, which may be omitted in another embodiment of the present invention.

If the calculated distance is equal to or larger than the reference value, the control unit 101 extracts the corresponding coordinates as the latest input coordinates and calculates the angle with reference to the initial input coordinates, and determines if the character is located at the location making the corresponding angle in the first circular character array 321. If the character is not located at the location making the corresponding angle, the control unit 101 determines if a currently selected character is located at the location making the corresponding angle, as in step 221. If a currently selected character is located at a location making the corresponding angle, the control unit 101 cancels the temporary selection in step 223, and correspondingly cancels the display of the highlighted character, and calculates the distance between the next coordinates and the initial input coordinates.

As illustrated in the example of the third screen 430, during the drag so as to select the letter "Q" by the user, even though the distance between the coordinates of the drag and the initial input coordinates is maintained equal to or larger than the reference value, the corresponding coordinates may be located at a location making an invalid angle. In this respect, the temporary selection of the letter "A" is cancelled. This is also to visually inform the user that the input of the user exceeds a selection validity scope of the already-selected character during the selection of another character, other than the already-selected character, which may be omitted in another embodiment of the present invention.

However, if a character is located at the location making the corresponding angle in the first circular character array 321, the control unit 101 temporarily selects the corresponding character, i.e., the letter "Q", and highlights and displays the temporarily selected character.

Further, the present invention can provide the user with the keypad having the characteristic of the touch screen so that the user can quickly and easily input the character through the touch screen. Further, according to the present invention, the characters displayed on the input unit are not hidden by the finger during the input of the character through the touch screen so that the user can accurately identify and input the selected character. Further, the present invention can curtail the time for searching for and selecting the character to be input by the user. Further, the user inputs the character through the same pattern at the same start point so that it is not necessary to press the keys arranged at a corner of the screen being difficult to reach, thereby improving the convenience of the input.

As described above, according to an embodiment of the present invention, characters displayed on an input unit are not hidden by the finger during an input using a touch screen, which enables a user to accurately identify and input the selected character and reduces the time for searching for and selecting the character to be input by the user. Further, the user inputs characters at the same start point through the same pattern when the user wants to input most of the characters, so that it is not necessary to press the keys arranged at a corner of the screen being difficult to reach, thereby improving the convenience of the input.

Although certain embodiments of the present invention have been illustrated and described, it will be appreciated by those skilled in the art that various changes may be made therein without departing from the spirit and scope of the present invention. For example, the character guide area can be constructed to allow the user to selectively input the character. That is, if the user touches and inputs any one character in the character array displayed on the character guide area, the corresponding character is displayed on the character display area. Therefore, the present invention is defined in the claims and their equivalent, not merely in the above-described embodiments.

**Claims**

1.  A method for inputting a character in a portable terminal including a touch screen, the method comprising the steps of:

    displaying a character display area for displaying a finally selected character, a character guide area for displaying a character array including multiple characters that are selectable by a user, and a character selection area for sensing a touch input of the user, during a character input mode;
    sensing a drag of the touch input through the character selection area;
    selecting a character from among the characters displayed on the character guide area corresponding to the sensed touch and drag sensed through the character selection area;
    displaying an expression representing the selection of the character through the character guide area; and
    finally selecting and displaying the selected character on the character display area, if the touch input is released.

2.  The method of claim 1, further comprising: displaying an expression representing a generation of the touch input on the character guide area, if the touch input is sensed in the character selection area during a standby state of the portable terminal.

3.  The method of claim 1, wherein displaying the expression through the character guide area comprises the steps of:

    storing coordinates of a point at which the touch input is sensed as initial input coordinates;
    detecting all coordinates of the drag in real time;
    calculating a distance between each of the detected coordinates and the initial input coordinates;
    extracting the coordinates of the drag having the calculated distance equal to or larger than a reference value as latest input coordinates;
    calculating an angle between a horizontal line passing the initial input coordinates and a straight line passing the initial input coordinates and the latest input coordinates;
    selecting a character located at a location making the calculated angle from the character array; and
    displaying the selected character through the character guide area.

4.  The method of claim 3, further comprising:

    if the calculated distance is less than the reference value and a currently selected character exist , cancelling a selection of the currently selected character; and
    displaying an expression representing the cancellation through the character guide area.

5.  The method of claim 3, further comprising:

    if a character is not located at the location making the calculated angle and a currently selected character exist, cancelling a selection of the currently selected character and
    displaying an expression representing the cancellation through the character guide area.

6.  The method of claim 3, further comprising, if a touch of the character included in the character array is input, displaying the touched character on the character display area.

7.  The method of any of claims 3 to 6, wherein the character array has one shape among a circular shape, an oval shape, and a polygonal shape.

8.  The method of claim 1, further comprising, if the touch input is released, initializing a display state of the character guide area.

9.  An apparatus for inputting a character in a portable terminal, comprising:

    a touch screen display; and
    a control unit for dividing the touch screen into a character display area for displaying a finally selected character, a character guide area for displaying a character array including multiple characters that are selectable by a user, and a character selection area for sensing a touch input of the user, to display the divided areas on the touch screen display during a character input mode,
    selecting a character from the characters displayed on the character guide area according to a drag of the touch input sensed through the character selection area,
displaying an expression representing the selection of the character through the character guide area, and
finally selecting and displaying a currently selected character on the character display area, if the touch input
is released.

**10.** The apparatus of claim 9, wherein if the touch input is sensed in the character selection area during a standby state,
the control unit displays an expression representing a generation of the touch input on the character guide area.

**11.** The apparatus of claim 9, wherein the control unit stores coordinates of a point at which the touch input is sensed
as initial input coordinates, if the touch input is sensed in the character selection area during a standby state,
detects all coordinates of the touch drag trace in real time,
calculates a distance between each of the detected coordinates and the initial input coordinates,
extracts the coordinates of the drag having the calculated distance equal to or larger than a reference value as latest
input coordinates,
calculates an angle between a horizontal line passing the initial input coordinates and a straight line passing the
initial input coordinates and the latest input coordinates,
selects the character corresponding to the calculated angle from the character array, and
displays the expression representing the selection of the character through the character guide area.

**12.** The apparatus of claim 11, wherein if the calculated distance is less than the reference value and a currently selected
character exist, the control unit cancels a selection of the currently selected character and displays an expression
representing the cancellation through the character guide area.

**13.** The apparatus of claim 11, wherein if a corresponding character is not located at a location making the calculated
angle and a currently selected character exist, the control unit cancels a selection of the currently selected character
and displays an expression representing the cancellation through the character guide area.

**14.** The apparatus of claim 11, wherein if a touch of the character included in the character array is input, the control
unit displays the touched character on the character display area.

**15.** The apparatus of any of claims 11 to 14, wherein the character array has one shape among a circular shape, an
oval shape, and a polygonal shape.

105

DISPLAY UNIT

107 — SCREEN UNIT

109 — TOUCH PANEL

101

CONTROL UNIT

103

MEMORY UNIT

# FIG.1

START

C

TOUCH
INPUT IS GENERATED IN
CHARACTER SELECTION
AREA? — 201                    NO

YES

STORE COORDINATES OF TOUCHED
POINT AS INITIAL INPUT COORDINATES
AND DISPLAY TOUCH INPUT GENERATION — 203
THROUGH CHARACTER GUIDE AREA

B

TOUCH DRAG? — 205            NO            A

YES

DETECT COORDINATES OF TOUCH DRAG
TRACE IN REAL TIME AND CALCULATE DISTANCE
BETWEEN CALCULATED COORDINATES — 207
AND INITIAL INPUT COORDINATES

CALCULATED DISTANCE≥
REFERENCE VALUE? — 209            NO

YES

SELECTED CHARACTER
IS LOCATED? — 211            NO

EXTRACT COORDINATES OF POINT
EQUAL TO OR LARGER THAN REFERENCE — 215
VALUE AS LATEST INPUT COORDINATES

YES — 213

CANCEL SELECTION

CALCULATE ANGLE BETWEEN HORIZONTAL
LINE PASSING INITIAL INPUT COORDINATES
AND STRAIGHT LINE PASSING — 217
INITIAL INPUT COORDINATES
AND LATEST INPUT COORDINATES

CHARACTER IS
LOCATED IN LOCATION MAKING
CALCULATED ANGLE IN CIRCULAR — 219
CHARACTER ARRAY?            NO

CURRENTLY
SELECTED CHARACTER IS
LOCATED? — 221            NO

YES — 223

CANCEL SELECTION

YES

SELECT CORRESPONDING CHARACTER
AND VISUALLY DISPLAY THE — 225
SELECTION OF CHARACTER

A

FIG.2A

FIG.2B

FIG.3

FIG.4